# EUROPEAN PATENT APPLICATION

(11) **EP 0 600 154 A1**
(43) Date of publication of application: **08.06.1994**
(21) Application number: 93111221.3
(22) Date of filing: 13.07.1993
(51) Int. Cl.: B62L 1/00

(54) **Bicycle brake shoe mounting hardware**

(30) Priority: 30.11.1992 US 983781
(71) Applicant: Hsueh, Chin-Yung, Tien Wei Country, Changhua Hsien (TW)
(72) Inventor: Hsueh, Chin-Yung, Tien Wei Country, Changhua Hsien (TW)
(74) Representative: Grünecker, Kinkeldey, Stockmair & Schwanhäusser Anwaltssozietät

(57) **Abstract**

A bicycle brake shoe mounting hardware is disclosed for fastening a brake shoe (2) assembly to one eye end (31) of one brake arm (3) by two washers (4) and an acorn locknut (5). The washers each has a flat face on one side attached to either side of the eye end and a concave face (41) attached to a convex surface of the brake shoe holder (211) of the brake shoe assembly or the cone head (51) of the acorn locknut. The brake shoe assembly is adjusted relative to the rim (6) of the corresponding bicycle wheel by changing the position of the convex surface of the brake shoe holder on the concave face of the matched washer.

## Description

### BACKGROUND OF THE INVENTION

### Field of the Invention

The present invention relates to bicycle brake shoe assemblies and relates more particularly to a bicycle brake shoe mounting hardware.

### Description of Prior Art

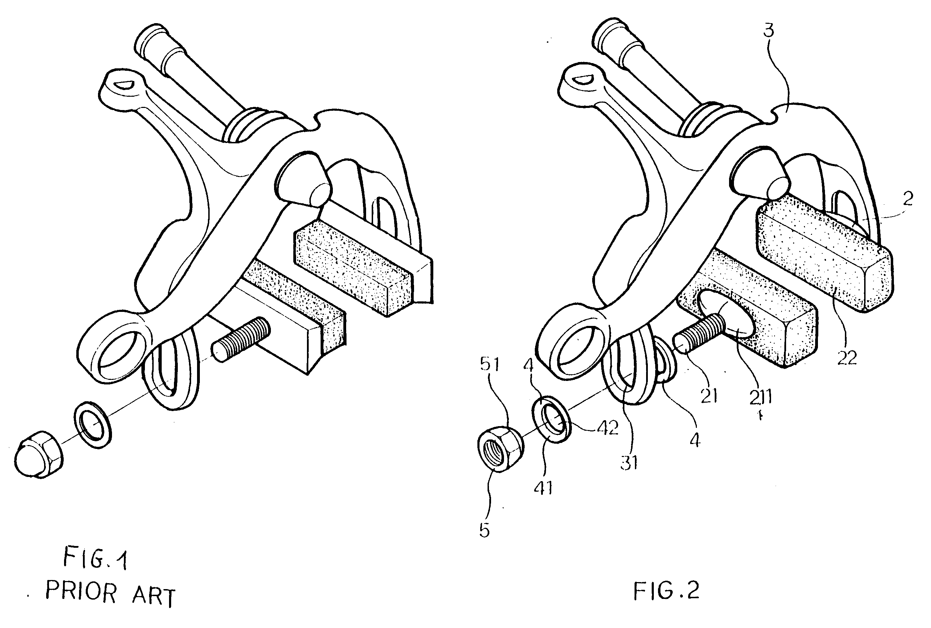

A bicycle brake assembly, as shown in Fig. 1, generally comprises a brake shoe attached to a brake shoe holder having a bolt fastened to one eye end of either brake arm by a washer and a locknut. This structure of bicycle brake assembly is still not satisfactory in use. Because the bolt is fastened to the brake shoe holder through a rivet joint, the brake shoe holder may disconnect from the bolt easily. Another disadvantage of this structure of bicycle brake assembly is that the brake shoe can be not adjusted to change the distance between the rim of the corresponding bicycle wheel, and therefore it should be replaced once it was worn off or partly worn off. Still another disadvantage of this structure of bicycle brake assembly is that the bolt may be loosened from the locknut easily, causing a brake failure. Furthermore, because the brake shoe holder is completely exposed to the outside, it may be covered with rust easily.

### SUMMARY OF THE INVENTION

The present invention eliminates the aforesaid disadvantages. It is therefore an object of the present invention to provide a bicycle brake shoe mounting hardware which is durable and safe in use. It is another object of the present invention to provide a bicycle brake shoe mounting hardware which can be conveniently adjusted to change its position relative to the rim of the corresponding bicycle wheel and the gap therebetween.

According to one aspect of the present invention, the brake shoe holder has a unitary bolt raised from a convex surface thereof and fastened to one eye end of a brake arm by two washers and an acorn locknut, and the brake shoe is directly molded on the brake shoe holder with the bolt tightly held to the brake shoe. According to another aspect of the present invention, the washers each has a center through hole, through which the bolt inserts, a flat face on one side attached to either side of the eye end, and a concave face attached to the convex surface of the brake shoe holder or the cone head of the acorn locknut.

### BRIEF DESCRIPTION OF THE DRAWINGS

The foregoing and other objects, features and advantages of the present invention will be best understood from the following description, the appended claims and the accompanying drawings in which:
Fig. 1 is an exploded view of a bicycle brake assembly as constructed according to the prior art;
Fig. 2 is an exploded view of a bicycle brake assembly as constructed according to the present invention;
Fig. 2-A is a sectional assembly view of the present invention showing the brake shoe directly molded on the brake shoe holder;
Fig. 2-B is another sectional view of the present invention showing the position of the brake shoe adjusted relative to the rim.

### DETAILED DESCRIPTION OF THE PREFERRED EMBODIMENT

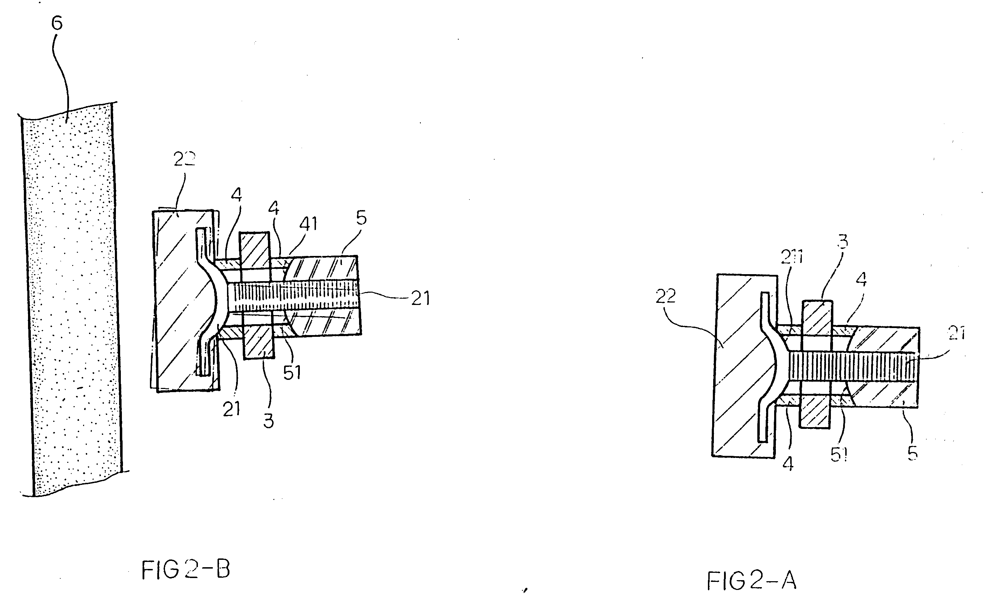

Referring to Fig. 2, a brake shoe assembly 2 is fastened to one eye end 31 of either (inner or outer) brake arm 3 by two washers 4 and an acorn locknut 5.

Referring to Fig. 2-A and Fig. 2 again, the brake shoe assembly 2 comprises a brake shoe 22 directly molded on a brake shoe holder 211. The brake shoe holder 211 has a unitary bolt 21 raised from a convex surface thereof inserted through the washers 4 and the eye end 31 of the brake arm 3 and threaded into a bolt hole (not shown) through the cone head 51 of the acorn locknut 5. The washers 4 each has a center through hole 42, through which the bolt 21 inserts, a flat face on one side attached to either side of the eye end 31, and a concave face 41 attached to the convex surface of the brake shoe holder 211 or the cone head 51 of the acorn locknut 5.

Referring to Fig. 2-B, if the brake shoe 22 is not disposed in parallel with the rim 6, it can be conveniently adjusted by loosening the acorn locknut 5 and turning the brake shoe assembly 2 in changing the position of the brake shoe holder 211 on the concave face 41 of the matched washer 4. Therefore, the brake shoe 22 of the brake shoe assembly 2 is adjusted into position for positive braking.

## Claims

1. A bicycle brake shoe mounting hardware comprising a brake shoe fastened to a brake shoe holder, said brake shoe holder having a bolt inserted through one eye end of either brake arm of a bicycle brake assembly by two washers and an acorn locknut, wherein said brake shoe is directly molded on said brake shoe holder, said brake shoe holder having a convex surface extended out of said brake shoe and attached to a concave face on either washer, said bolt being raised from said convex surface of said brake shoe and inserted through holes on said washers and said eye end and locked with said acorn locknut, said acorn locknut having a conical head attached to a concave face on the other washer.
